Europäisches Patentamt

**European Patent Office**

Office européen des brevets

(19)

(11) Veröffentlichungsnummer: **0 013 906**
**B1**

(12) **EUROPÄISCHE PATENTSCHRIFT**

(45) Veröffentlichungstag der Patentschrift:
23.06.82

(21) Anmeldenummer: 80100106.6

(22) Anmeldetag: 10.01.80

(51) Int. Cl.³: **C 23 D 5/00,** C 03 C 7/00,
C 23 D 5/10

(54) Beschichteter Metallgegenstand und Verfahren zu dessen Herstellung.

(30) Priorität: 17.01.79 DE 2901645
20.06.79 DE 2924807

(43) Veröffentlichungstag der Anmeldung:
06.08.80 Patentblatt 80/16

(45) Bekanntmachung des Hinweises auf die Patenterteilung:
23.06.82 Patentblatt 82/25

(84) Benannte Vertragsstaaten:
BE DE FR GB IT NL

(56) Entgegenhaltungen:
CH-A-434 924
DE-A-2 018 541
DE-A-2 218 319
DE-A-2 300 448
DE-A-2 654 697
US-A-2 977 251
US-A-3 203 815
US-A-3 285 773
US-A-3 850 647

(73) Patentinhaber: BAYER AG, Zentralbereich Patente, Marken und Lizenzen, D-5090 Leverkusen 1, Bayerwerk (DE)

(72) Erfinder: Krist, Otto, Grosshurdener Berg Nr. 8, D-5063 Overath (DE)
Erfinder: Wagner, Gebhard, Dr., Ackerstrasse 31, D-5068 Odenthal (DE)
Erfinder: Joseph, Werner, Dr., Ludwig-Aschhoferstrasse 20, D-5000 Köln 80 (DE)

## Beschichteter Metallgegenstand und Verfahren zu dessen Herstellung

Die Erfindung betrifft hochtemperatur- und temperaturwechselbeständige anorganische metallpulverhaltige Schutzschichten, die metallische Werkstoffe vor Korrosion schützen.

Der Schutz metallischer Werkstücke, die hohen Temperaturen und raschem Temperaturwechsel ausgesetzt sind, vor korrosiven Dämpfen und Flüssigkeiten ist bisher technisch nicht befriedigend gelöst. Derartige Probleme treten z. B. bei Verbrennungsanlagen auf, wenn diese durch Taupunktunterschreitungen mit sauren oder salzhaltigen Aerosolen oder Kondensaten in Berührung kommen. Als Beispiel hierfür werden Heizkessel, Wärmetauscher, Abgasleitungen und Abgasschalldämpfer, genannt. Es wurde versucht, Metalle durch temperatur- und korrosionsbeständige Emailüberzüge zu schützen. Diese versagen jedoch bei Dauertemperatur über 600°C und bei raschem Temperaturwechsel. An den dabei entstehenden Rissen setzt dann die Korrosion ein.

In der US-A-3 203 815 wird vorgeschlagen, Metall durch ein Gemisch aus einer bleihaltigen Fritte, Aluminiumpulver und Acrylharzen zu schützen, welches bei Temperaturen um 800°C auf das Metallsubstrat aufgeschmolzen wird. Die dabei entstehende Schicht ist temperaturbeständig, wird jedoch durch kochende verdünnte Zitronensäure-Lösung (DIN 51 151) bereits nach kurzer Zeit vollkommen zerstört.

Das Verfahren hat weiterhin die Nachteile, daß die organische Substanz während des Einbrennvorgangs schwelend verbrennt, so daß die dabei entstehenden Dämpfe, z. B. durch Nachverbrennung, beseitigt werden müssen.

In der GB-A-1 498 810 wird ein ähnliches System beschrieben, das aus einem Bleiborat, Aluminiumpulver und ebenfalls einem organischen Acrylharz besteht.

Aus der US-A-3 706 579 wurden Metallkeramik-Schutzüberzugsmassen bekannt, bei denen eine zunächst homogene Glasmasse eingesetzt wird, die beim erneuten Brennen 2 flüssige Phasen bildet. Solche homogenen Glasmassen enthalten sehr hohe Boroxidgehalte von etwa 25 bis 50 Gew.-%, wodurch der Säureangriff begünstigt wird.

Aus DE-A-2 018 541 und DE-A-2 218 319 sind Metallkeramiküberzüge auf Basis von Alkaliborosilikatfritten für spezielle Anwendungen bekannt. Aufgrund ihrer Offenporigkeit besitzen sie jedoch keine ausreichende Säurebeständigkeit.

Aufgabe der vorliegenden Erfindung ist es nun, beschichtete Metallgegenstände zur Verfügung zu stellen, bei denen die Beschichtung gegenüber den bekannten Beschichtungen bezüglich Korrosions-, Hochtemperatur- und Temperaturwechsel-Beständigkeit überlegen sind.

Die vorliegende Erfindung betrifft daher einen beschichteten Metallgegenstand, bestehend aus einer das Metallsubstrat benetzenden geschlossenporigen, bleifreien Alkaliborosilikatglasur-Matrix, enthaltend maximal 18 Gew.-% $B_2O_3$, bezogen auf die Glasur, in der zwischen 5 und 35 Gew.-% teiloxidierte Aluminiumpartikel oder Teilchen einer Aluminium-Kupfer-Legierung und zwischen 10 und 40 Gew.-%, jeweils bezogen auf die Beschichtung, Partikel mindestens eines temperaturbeständigen anorganischen oxidischen Materials dispergiert sind.

Die Glasurmatrix weist folgende Zusammensetzung auf:

$SiO_2$ 45 bis 55, vorzugsweise 50 bis 52 Gew.-%,
$B_2O_3$ 12 bis 18, vorzugsweise 13 bis 17 Gew.-%,
$Al_2O_3$ 0 bis 5, vorzugsweise 0 bis 3 Gew.-%,
Alkalioxide 14 bis 20, vorzugsweise 16 bis 18 Gew.-%,
Erdalkalioxide 4 bis 10, vorzugsweise 6 bis 9 Gew.-%,
Titanoxid und/oder Zirkonoxid 1 bis 8, vorzugsweise 4 bis 7 Gew.-%,
Haftoxide (CoO, NiO, CuO) 1 bis 5, vorzugsweise 3 bis 5 Gew.-%,
sowie einen F-Gehalt zwischen 0 und 5 Gew.-%.

Die in der Beschichtung enthaltenen Metall- bzw. Legierungspartikel haben vorzugsweise ein Kornverteilungsmaximum von 20 bis 60 μ, wobei der Anteil der Partikel über 80 μ kleiner als 2% betragen soll.

Bevorzugt werden Aluminium-Kupfer-Legierungen mit einem Kupfergehalt von 50 bis 70 Gew.-%. Mit diesen Legierungen werden duktile Beschichtungen mit extrem hoher Spannungs-Riß-Korrosionsbeständigkeit erhalten.

Das temperaturbeständige anorganische oxidische Material kann z. B. aus Quarz, Feldspäten, Zirkonsand, Rutil, Monazitsand, Basalt, Ilmenit oder aus schwer schmelzbaren Fritten bestehen.

Vorzugsweise besteht das anorganische oxidische Material aus einer Fritte von folgender Zusammensetzung:

$SiO_2$ 45 bis 60, vorzugsweise 46 bis 51 Gew.-%,
Alkalioxide 8 bis 15, vorzugsweise 10 bis 12 Gew.-%,
Erdalkalioxide 0 bis 5, vorzugsweise 3 bis 5 Gew.-%,
$Fe_2O_3$ 0 bis 10, vorzugsweise 2 bis 8 Gew.-%,

CuO und/oder MnO 15 bis 30, vorzugsweise 20 bis 25 Gew.-%,
TiO$_2$ und/oder ZrO$_2$ 5 bis 20, vorzugsweise 6 bis 12 Gew.-%.

Die Teilchengröße des anorganischen oxidischen Materials soll unterhalb 100 µm liegen.

Bevorzugt ist die schwerschmelzbare Fritte in Kombination mit Quarzpulver und/oder Zirkonsand enthalten.

Die erfindungsgemäße Beschichtung soll eine Schichtstärke von 50 bis 250 µ, vorzugsweise 100 bis 200 µm, aufweisen.

Gegenstand der vorliegenden Erfindung ist ferner das Verfahren zur Herstellung der beschichteten Gegenstände.

Das Verfahren ist dadurch gekennzeichnet, daß aus einer säurebeständigen, auf Stahlblech direkt haftfähigen Glasurfritte mit einer Erweichungstemperatur (Tg) von weniger als 520° C und einem Blei- und Bor-freien anorganischen oxidischen Material mit einer Erweichungstemperatur (Tg) von mehr als 600° C unter Zusatz von Wasser, Ton und Stellsalzen durch Vermahlung eine wäßrige Suspension hergestellt wird, diese durch wasserlösliche Puffersubstanzen auf einen pH-Bereich zwischen 5,5 und 7,5 stabilisiert und mit Aluminium- bzw. Aluminium-Kupfer-Legierungspulver vermischt wird, die erhaltene Suspension auf in üblicher Weise durch Entfetten und Beizen vorbehandelte metallische Gegenstände durch Tauchen oder Spritzen aufgebracht, getrocknet und bei Temperaturen zwischen 760 und 900° C eingebrannt wird.

Die erfindungsgemäße eingesetzte Glasurfritte soll vorzugsweise bei Einbrenntemperaturen eine Oberflächenspannung zwischen 0,25 und 0,30 N/m aufweisen und ferner in der Lage sein, das metallische Substrat gut zu benetzen und oberflächlich aufzulösen. Die genannten Bedingungen werden von einer Glasurfritte folgender Zusammensetzung besonders gut erfüllt:

SiO$_2$ 45 bis 55, vorzugsweise 50 bis 52 Gew.-%,
B$_2$O$_3$ 12 bis 18, vorzugsweise 13 bis 17 Gew.-%,
Al$_2$O$_3$ 0 bis 5, vorzugsweise 0 bis 3 Gew.-%,
Alkalioxide 14 bis 20, vorzugsweise 16 bis 18 Gew.-%,
Erdalkalioxide 4 bis 10, vorzugsweise 6 bis 9 Gew.-%,
TiO$_2$ und/oder ZrO$_2$ 1 bis 8, vorzugsweise 4 bis 7 Gew.-%,
Haftoxide 1 bis 5, vorzugsweise 3 bis 5 Gew.-%,
sowie einen F-Gehalt zwischen 0 und 5%.

Das temperaturbeständige, anorganische oxidische Material soll nicht in der Lage sein, den metallischen Werkstoff zu benetzen oder entstehende Oxidationsprodukte des metallischen Werkstoffs aufzulösen. Vorzugsweise wird eine Fritte der folgenden Zusammensetzung eingesetzt:

SiO$_2$ 45 bis 60, vorzugsweise 46 bis 51 Gew.-%,
Alkalioxide 8 bis 15, vorzugsweise 10 bis 12 Gew.-%,
Erdalkalioxide 0 bis 5, vorzugsweise 3 bis 5 Gew.-%,
Fe$_2$O$_3$ 0 bis 10, vorzugsweise 2 bis 8 Gew.-%,
CuO und/oder MnO 15 bis 30, vorzugsweise 20 bis 25 Gew.-%,
TiO$_2$ und/oder ZrO$_2$ 5 bis 20, vorzugsweise 6 bis 12 Gew.-%.

Die Oberflächenspannung dieser höherschmelzenden Fritte bei Einbrenntemperaturen liegt bevorzugt zwischen 0,32 und 0,36 N/m.

Die schwerer schmelzbare Fritte kann teilweise oder ganz durch thermisch inerte, mineralische oder synthetische Stoffe, wie z. B. Quarz, Feldspäte, Zirkonsand, Rutil, Monazitsand, Basalt, Ilmenit oder ähnliche ersetzt werden.

Es wurde gefunden, daß sich die auf dem Stahlblech direkt haftunfähige Glasurfritte bei Einbrenntemperaturen bevorzugt an der metallischen Oberfläche anreichert und hier eine dichte, die Haftung vermittelnde Zwischenschicht bildet. Das temperaturbeständigere anorganische oxidische Material dagegen bildet mit dem teilweise oxidierten Aluminium- bzw. Aluminium-Kupfer-Legierungspulver und einem geringeren Teil der benetzenden Glasurfritte als Matrix eine blasenreiche, geschmolzene geschlossenporige Schicht. Während des Einbrennens findet also überraschenderweise eine Separation der im Schlicker homogen verteilten glasigen Bestandteile statt.

Im folgenden wird die vorligende Erfindung anhand von Beispielen näher erläutert:

## Beispiel 1

Aus handelsüblichen Rohstoffen, wie sie für die Emailherstellung verwendet werden, wurde bei 1250° C eine Matrixfritte I folgender oxidischer Zusammensetzung erschmolzen:

SiO$_2$     51.0
B$_2$O$_3$     16.5

| | |
|---|---|
| Al$_2$O$_3$ | 1.0 |
| Na$_2$O | 12.0 |
| NaF | 1.0 |
| K$_2$O | 1.0 |
| Li$_2$O | 2.0 |
| CaO | 2.0 |
| BaO | 4.0 |
| TiO$_2$ | 5.0 |
| CoO | 2.0 |
| NiO | 2.0 |
| CuO | 0.5 |
| | 100.0 |

Die Schmelze wurde in Wasser abgeschreckt und getrocknet. Ferner wurden aus handelsüblichen Rohstoffen, wie sie für die Emailherstellung verwendet werden, bei 1350 bis 1400°C die schwer schmelzende Fritte II folgender Zusammensetzung erschmolzen:

| | |
|---|---|
| SiO$_2$ | 46.0 |
| Na$_2$O | 9.0 |
| K$_2$O | 2.0 |
| CaO | 5.0 |
| Fe$_2$O$_3$ | 7.0 |
| MnO | 1.0 |
| CuO | 19.0 |
| TiO$_2$ | 6.0 |
| ZrO$_2$ | 5.0 |

Nach dem Abschrecken der Schmelze in Wasser und dem Trocknen der so erhaltenen Granalien wurden diese in einer Porzellankugelmühle zusammen mit der Matrixfritte I nach folgendem Mühlenversatz solange vermahlen, bis der Rückstand auf einem Sieb der Maschenweite 100 µm weniger als 3% — bezogen auf den Feststoff — betrug:

| | |
|---|---|
| Matrixfritte I | 50.0 Teile |
| Fritte II | 50.0 Teile |
| Emaillierton | 2.0 Teile |
| Bentonit | 1.0 Teile |
| Borsäure | 4.0 Teile |
| Natriumnitrit | 0.2 Teile |
| Wasser | 65.0 Teile |

In diese so erhaltene Suspension wurden 40 Teile Aluminiumpulver mit einem Kornverteilungsmaximum zwischen 20 und 60 µm eingerührt.

Mit diesem Schlicker wurden 100 × 100 mm große Stahlbleche mit einer Stärke von 1 mm, die in bekannter Weise für eine Emaillierung vorbereitet worden waren, durch Spritzauftrag beidseitig derartig beschichtet, daß nach dem Einbrennen bei einer Temperatur von 840°C eine Schichtstärke von 150 bis 180 µm resultierte. Der Überzug zeigte eine gleichmäßig matte Oberfläche, er haftet gut auf dem Stahlblech. Die Schutzschicht ist reich an Mikroblasen und enthält teiloxidierte duktile Aluminiumpartikel.

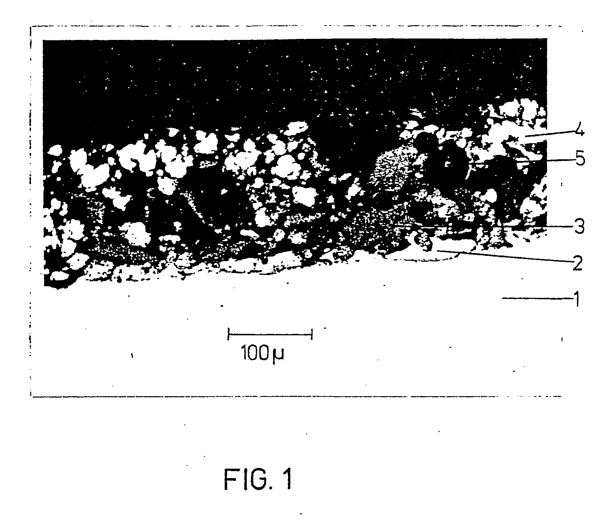

Die anliegende Figur 1 zeigt die mikrophotographische Abbildung eines Querschnitts des erhaltenen beschichteten Stahlbleches. Die in der Figur angegebenen Ziffern bezeichnen im einzelnen:

1 Stahlblech
2 Matrixfritte I
3 Fritte II
4 teiloxidierte Al-Partikel
5 Blasen, Poren.

## Beispiel 2

Aus handelsüblichen Rohstoffen, wie sie für die Emailherstellung verwendet werden, wurde bei 1200°C eine Matrixfritte III folgender Zusammensetzung erschmolzen:

| | |
|---|---|
| SiO$_2$ | 51.5 |
| B$_2$O$_3$ | 13.0 |
| NaO | 13.0 |
| Li$_2$O | 2.5 |
| CaO | 1.0 |
| BaO | 8.0 |
| TiO$_2$ | 6.0 |
| ZrO$_2$ | 1.0 |
| CoO | 1.5 |
| NiO | 2.5 |
| | 100.0 |

Die Schmelze wurde in Wasser abgeschreckt und getrocknet. Ferner wurden aus handelüblichen Rohstoffen, wie sie für die Emailherstellung verwendet werden, bei 1380°C bis 1420°C eine schwer schmelzbare Fritte IV folgender Zusammensetzung erschmolzen:

| | |
|---|---|
| SiO$_2$ | 51.0 |
| Na$_2$O | 6.0 |
| K$_2$O | 4.0 |
| CaO | 4.0 |
| MgO | 2.0 |
| Fe$_2$O$_3$ | 2.0 |
| MnO | 12.0 |
| CuO | 12.0 |
| TiO$_2$ | 4.0 |
| ZrO$_2$ | 3.0 |
| | 100.0 |

Nach dem Abschrecken der Schmelze in Wasser und dem Trocknen der so erhaltenen Granalien wurden diese in einer Porzellankugelmühle zusammen mit der in diesem Beispiel angegebenen Matrixfritte III nach folgendem Mühlenversatz solange vermahlen, bis der Rückstand auf einem Sieb der Maschenweite 73 µm weniger als 4% bezogen auf den Feststoff betrug:

| | |
|---|---|
| Matrixfritte III | 55.0 Teile |
| Fritte IV | 25.0 Teile |
| Zirkonmehl ( <60 µm) | 20.0 Teile |
| Emaillierton | 2.5 Teile |
| Bentonit | 0.8 Teile |
| Borsäure | 3.0 Teile |
| Weinsäure | 0.5 Teile |
| Natriumnitrit | 0.2 Teile |
| Wasser | 55.0 Teile |

In diese so erhaltene Suspension wurden 30 Teile Aluminiumpulver mit einem Kornverteilungsmaximum zwischen 20 und 60 µm eingerührt. 100 × 100 mm große Stahlbleche mit einer Stärke von 3 mm, die durch Strahlen mit Stahlkies dekapiert worden waren, wurden in den so erhaltenen Schlicker getaucht. Nach 5minütigem Brennen bei 850°C hatte sich eine geschlossene Schutzschicht in einer Stärke von 80 bis 110 µm ergeben.

Beispiel 3

Die Matrixfritte I aus Beispiel 1 wurde mit gemahlenem mineralischem Rutilmehl einer maximalen Korngröße von 70 µm und Cristobalit-Feinstmehl mit einer maximalen Korngröße von 40 µm nach folgendem Mühlenversatz solange vermahlen, bis der Rückstand auf einem Sieb der Maschenweite 73 µm weniger als 1%, bezogen auf den Feststoff, betrug:

| | |
|---|---|
| Matrixfritte I | 70.0 Teile |
| Rutilmehl | 20.0 Teile |
| Cristobalit-Feinstmehl | 10.0 Teile |
| Emaillierton | 4.0 Teile |
| Bentonit | 0.2 Teile |
| Borsäure | 4.0 Teile |

| Natriumnitrit | 0.2 Teile |
|---|---|
| Lithiumfluorid | 0.4 Teile |
| Wasser | 50.0 Teile |

In diese so erhaltene Suspension wurden 40 Teile Aluminiumpulver mit einem Kornverteilungsmaximum zwischen 20 und 60 μm eingerührt und unter Zugabe von etwa 10 Teilen Wasser zu einem auftragsfähigen Schlicker konditioniert.

200 × 300 × 8 mm Platten aus emaillierfähigem Gußeisen, die durch Strahlen mit Stahlkies dekapiert worden waren, wurden mit dem so erhaltenen Schlicker durch Spritzauftragen derartig beschichtet, daß sich nach 30minütigem Brennen bei 780°C eine geschlossene Schutzschicht in einer Stärke von 100 bis 120 μm ergab.

## Beispiel 4

50 Teile der Matrixfritte I aus Beispiel 1 wurden mit 5 Teilen Feinstquarz (<40 μm) unter Zusatz von 2 Teilen Emaillierton, 2 Teilen Borsäure, 0,1 Teil Natriumnitrit und 30 Teilen Wasser solange vermahlen, bis der Rückstand auf einem Sieb der Maschenweite 40 μm weniger als 2%, bezogen auf den Feststoff, betrug. In einem zweiten Mahlvorgang wurden 45 Teile Fritte II aus Beispiel 1 mit 2 Teilen Emaillierton, 2 Teilen Borsäure, 0,1 Teil Natriumnitrit und 30 Teilen Wasser so lange vermahlen, bis der Rückstand auf einem Sieb der Maschenweite 100 μm weniger als 2%, bezogen auf den Feststoff, betrug.

Diese beiden so erhaltenen Suspensionen wurden vereinigt und mit 35 Teilen Aluminiumpulver sowie etwa 10 Teilen Wasser versetzt.

Durch Strahlen gesäuberte Kupferrohre mit einem Durchmesser von 50 mm und einer Wandstärke von 2 mm wurden durch Eintauchen in diese Suspension beschichtet, getrocknet und 10 Minuten bei 800°C eingebrannt. Der Überzug hatte sowohl innen als auch außen am Rohr eine Schichtstärke von 100 bis 120 μm.

## Beispiel 5

In eine nach Beispiel 3 erhaltene Suspension wurden anstelle von Aluminiumpulver 40 Teile eines Aluminium-Kupfer-Legierungspulvers der Zusammensetzung 40 : 60 Gew.-% entsprechend etwa einer Legierung $Al_2Cn$ mit einem Kornverteilungsmaximum zwischen 20 und 60 μm eingerührt und unter Zugabe von etwa 10 Teilen Wasser zu einem auftragsfähigen Schlicker konditioniert.

200 × 300 × 8 mm Platten aus emaillierfähigem Gußeisen, die durch Strahlen mit Stahlkies dekapiert worden waren, wurden mit dem so erhaltenen Schlicker durch Spritzauftragen derartig beschichtet, daß sich nach 30minütigem Brennen bei 780°C eine geschlossene Schutzschicht in einer Stärke von 100 bis 120 μ ergab.

## Beispiel 6

80 Teile der Matrixfritte I aus Beispiel 1 wurden mit 10 Teilen Rutilmehl (<80 μm) und 10 Teilen Feinstquarz (<40 μm) unter Zusatz von 4 Teilen Emaillierton, 3 Teilen Borsäure, 0,2 Teilen Natriumnitrit und 50 Teilen Wasser solange vermahlen, bis der Rückstand auf einem Sieb der Maschenweite 40 μm etwa 5%, bezogen auf den Feststoff, betrug.

In diese so erhaltene Suspension wurden 65 Teile Al-Cn-Pulver (40 : 60 Gew.-%) mit einem Kornverteilungsmaximum zwischen 20 und 60 μm unter Zusatz von etwa 10 Teilen Wasser eingerührt.

Mit diesem Schlicker wurden 100 × 100 mm große Stahlbleche mit einer Stärke von 1 mm, die in bekannter Weise für eine Emaillierung vorbereitet worden waren, durch Spritzauftrag beidseitig derartig beschichtet, daß nach dem Einbrennen bei einer Temperatur von 840°C eine Schichtstärke von 150 bis 180 μm resultierte. Der Überzug zeigte eine gleichmäßig matte Oberfläche, er haftet gut auf dem Stahlblech. Die Schutzschicht ist reich an Mikroblasen und enthält teiloxidierte duktile Legierungspartikel.

Die erfindungsgemäß beschichteten Probestahlbleche nach Beispiel 1 bis 6 wurden folgenden Tests unterzogen

### a) Temperaturwechselbehandlung

Die Stahlbleche wurden 10mal auf eine Temperatur von 700°C erhitzt und jeweils 2 Stunden bei dieser Temperatur gehalten, wobei die Stahlbleche zwischen je zwei Wärmebehandlungen an Luft bis

0 013 906

auf Zimmertemperatur abgekühlt wurden. Ferner wurden die Stahlbleche ebenfalls zehnmal auf eine Temperatur von 550° C aufgeheizt und durch Eintauchen in kaltes Wasser auf 20° C abgeschreckt.

### b) Sprühnebelbehandlung

Die Stahlbleche wurden 7 Tage lang einer Sprühnebelbehandlung mit einer 5%igen Natriumchloridlösung (gemäß SS DIN 50 021, Ausgabe Mai 1975, entsprechend ASTM-Designation B 111-73 »Standard Method of Salt Spray (fog) Testing«) ausgesetzt.

### c) Schwitzwasser-Wechselklima

Die Proben wurden in einer Kammer mit einem Volumen von 300 l zunächst 8 Stunden einer Temperatur von 40°C und einer rel. Luftfeuchtigkeit von 100% und anschließend 16 Stunden der Raumtemperatur und einer rel. Luftfeuchtigkeit von 75% ausgesetzt, wobei vor dem Aufheizen 2 l $SO_2$ in die Kammer eingeleitet wurden (nach SFW 2,0 S DIN 50 018, Ausgabe Dezember 1963). Der Behandlungszyklus wurde 5mal wiederholt.

### d) Säurebehandlung

Die Proben wurden nach DIN 51 151 2,5 Stunden lang in 6%iger Zitronensäure gekocht.

### Ergebnis

Bei keiner der Proben konnte eine Veränderung der Schicht bzw. des metallischen Substrates aufgrund der Temperaturbehandlung festgestellt werden. Beschädigungen oder Risse aufgrund der Abschreckbehandlung waren nicht zu beobachten.

Nach der Sprühnebelbehandlung konnte bei keiner Probe ein Korrosionsangriff festgestellt werden. Nach dem Schwitzwasser-Wechselklimatest zeigten die Proben einen geringfügigen Belag. Eine metallographische Untersuchung ergab jedoch keine korrosive Veränderung der Schicht und keinen Korrosionsangriff auf das Substrat. Der Flächengewichtsverlust nach der Säurebehandlung lag jeweils geringer als 15 g/m². An dem metallischen Substrat wurde kein Säureangriff festgestellt.

Die Proben nach Beispiel 3 und 5 wurden ferner über einen Zeitraum von 48 Stunden einer Temperatur von 700°C ausgesetzt. Auch hierbei wurde keinerlei Veränderung der Schutzschicht beobachtet. Bei diesen Proben wurden ferner die Temperatur, von der abgeschreckt wurde, auf 620° C erhöht. Nach zehnmaligem Abschrecken wurde keinerlei Beschädigung oder Rißbildung festgestellt.

### Patentansprüche

1. Metallgegenstand mit einer porösen Beschichtung aus einer das Metallsubstrat benetzenden bleifreien Alkaliborosilikatglasurmatrix und darin dispergierten Metallpartikeln, dadurch gekennzeichnet, daß in einer

a) geschlossenporigen
b) Alkalisilikatglasurmatrix der Zusammensetzung

| | |
|---|---|
| $SiO_2$ | 45 – 55 Gew.-% |
| $B_2O_3$ | 12 – 18 Gew.-% |
| $Al_2O_3$ | 0 – 5 Gew.-% |
| Alkalioxide | 14 – 20 Gew.-% |
| Erdalkalioxide | 4 – 10 Gew.-% |
| $TiO_2$ und/oder $ZrO_2$ | 1 – 8 Gew.-% |
| CoO, NiO und/oder CuO | 1 – 5 Gew.-% |
| F | 0 – 5 Gew.-% |

c) 5 bis 35 Gew.-% teiloxidierte Aluminium- bzw. Aluminium-Kupfer-Legierungs-Partikel und
d) 10 bis 40 Gew.-% Partikel mindestens eines temperaturbeständigen, bei höherer Temperatur erweichenden anorganischen oxidischen Materials

jeweils bezogen auf die Beschichtung dispergiert sind.

2. Gegenstand nach Anspruch 1, wobei die Beschichtung Aluminium-Kupfer-Legierungspulver mit 50 bis 70 Gew.-% Kupfer enthält.

3. Gegenstand nach Anspruch 1 oder 2, dadurch gekennzeichnet, daß das temperaturbeständige

7

anorganische oxidische Material folgende Zusammensetzung aufweist

| | |
|---|---|
| SiO$_2$ | 45 – 60 Gew.-% |
| Alkalioxide | 8 – 15 Gew.-% |
| Erdalkalioxide | 0 – 5 Gew.-% |
| Fe$_2$O$_3$ | 0 – 10 Gew.-% |
| CuO und/oder MnO | 15 – 30 Gew.-% |
| TiO$_2$ und/oder ZrO$_2$ | 5 – 20 Gew.-%. |

4. Gegenstand nach Anspruch 3, dadurch gekennzeichnet, daß anorganische oxidische Material zumindest teilweise durch Quarz, Feldspäte, Zirkonsand, Rutil, Monazitsand, Basalt und/oder Ilmenit ersetzt ist.

5. Gegenstand nach mindestens einem der Ansprüche 1 bis 4, dadurch gekennzeichnet, daß das teiloxidierte Aluminium- bzw. Legierungspulver ein Kornverteilungsmaximum von 20 bis 60 µm aufweist, wobei der Anteil über 80 µm kleiner als 2% ist.

6. Verfahren zur Herstellung beschichteter Metallgegenstände nach einem der Ansprüche 1 bis 5, dadurch gekennzeichnet, daß aus einer säurebeständigen, auf Stahlblech direkt haftfähigen Glasurfritte mit einer Erweichungstemperatur von weniger als 520° C und einem Blei- und Bor-freien anorganischen oxidischen Material mit einer Erweichungstemperatur von mehr als 600° C unter Zusatz von Wasser, Ton und Stellsalzen durch Vermahlung eine wäßrige Suspension hergestellt wird, diese durch wasserlösliche Puffersubstanzen auf einen pH-Bereich zwischen 5,5 und 7,5 stabilisiert und mit Aluminium- bzw. Aluminium-Kupfer-Legierungspulver vermischt wird, der erhaltene Schlicker auf in üblicher Weise durch Entfetten und Beizen vorbehandelte metallische Werkstoffe durch Tauchen oder Spritzen aufgebracht, getrocknet und bei Temperaturen von 760 bis 900° C eingebrannt wird.

## Claims

1. A metal article with a porous coating consisting of a lead-free alkali metal borosilicate glaze matrix wetting the metal substrate and metal particles dispersed in the matrix, characterised in that, in a

a) closed pored
b) alkali metal borosilicate glaze matrix with the following composition

| | |
|---|---|
| SiO$_2$ | 45 – 55% by weight |
| B$_2$O$_3$ | 12 – 18% by weight |
| Al$_2$O$_3$ | 0 – 5% by weight |
| alkali metal oxides | 14 – 20% by weight |
| alkaline earth metal oxides | 4 – 10% by weight |
| TiO$_2$ and/or ZrO$_2$ | 1 – 8% by weight |
| CoO, NiO and/or CuO | 1 – 5% by weight |
| F | 0 – 5% by weight, |

c) 5 to 35% by weight of partially oxidized aluminium particles or particles of an aluminium-copper alloy and
d) 10 to 40% by weight of particles of at least one temperatureresistant inorganic oxidic material which softens at elevated temperatures,

based in each case on the coating, are dispersed.

2. An article according to claim 1, wherein the coating contains aluminium-copper alloy powder comprising 50 to 70% by weight of copper.

3. An article according to claim 1 or 2, characterised in that the temperature-resistant inorganic oxidic material has the following composition

| | |
|---|---|
| SiO$_2$ | 45 – 60% by weight |
| alkali metal oxides | 8 – 15% by weight |
| alkaline earth metal oxides | 0 – 5% by weight |
| Fe$_2$O$_3$ | 0 – 10% by weight |
| CuO and/or MnO | 15 – 30% by weight |
| TiO$_2$ and/or ZrO$_2$ | 5 – 20% by weight. |

4. An article according to claim 3, characterised in that the inorganic oxidic material is substituted at least partially by quartz, feldspars, zirconium sand, rutile, monazite sand, basalt and/or ilmenite.

5. An article according to at least one of claims 1 to 4, characterised in that the partially oxidized aluminium or alloy powder has a particle distribution maximum of 20 to 60 µm, and less than 2% is above 80 µm.

6. Process for the production of coated metal articles according to one of claims 1 to 5, characterised

8

**0 013 906**

in that an aqueous suspension is prepared from an acid-resistant glaze frit which is capable of adhering directly to steel sheet and has a softening temperatur of below 520° C and an inorganic oxidic material which is free from lead and boron and has a softening temperature of above 600° C with the addition of water, clay and buffer salts, stabilizing the aqueous suspension to a pH range between 5.5 and 7.5 by water-soluble buffer substances and mixing with aluminium powder or aluminium-copper alloy powder, and applying the resulting slip by immersion or spraying to metal materials which have been prepared by degreasing and pickling in the usual manner, and drying and stoving at temperatures of 760 to 900° C.

## Revendications

1. Article métallique comportant un enduit poreux d'une matrice d'émail de borosilicate alcalin, exempte de plomb, imprégnant le substrat métallique et dans laquelle sont dispersées des particules métalliques, caractérisé en ce que, dans une matrice d'émail de silicate alcalin

a) à pores fermés et
b) de la composition suivante

| | |
|---|---|
| $SiO_2$ | 45 – 55% en poids |
| $B_2O_3$ | 12 – 18% en poids |
| $Al_2O_3$ | 0 – 5% en poids |
| Oxydes alcalins | 14 – 20% en poids |
| Oxydes alcalino-terreux | 4 – 10% en poids |
| $TiO_2$ et/ou $ZrO_2$ | 1 – 8% en poids |
| CoO, NiO et/ou CuO | 1 – 5% en poids |
| F | 0 – 5% en poids, |

on disperse:
c) 5 à 35% en poids de particules d'aluminium ou d'alliage d'aluminium/cuivre partiellement oxydées, et
d) 10 à 40% en poids de particules d'au moins une matière inorganique à base d'oxydes, stable à la température et ramollissant à une température supérieure,

chacun de ces pourcentages étant calculé sur l'enduit.

2. Article suivant la revendication 1, caractérisé en ce que l'enduit contient de la poudre d'alliage d'aluminium/cuivre avec 50 à 70% en poids de cuivre.

3. Article suivant la revendication 1 ou 2, caractérisé en ce que la matière inorganique à base d'oxydes et stable à la température a la composition suivante

| | |
|---|---|
| $SiO_2$ | 45 – 60% en poids |
| Oxydes alcalins | 8 – 15% en poids |
| Oxydes alcalino-terreux | 0 – 5% en poids |
| $Fe_2O_3$ | 0 – 10% en poids |
| CuO et/ou MnO | 15 – 30% en poids |
| $TiO_2$ wr/ou $ZrO_2$ | 5 – 20% en poids. |

4. Article suivant la revendication 3, caractérisé en ce que la matière inorganique à base d'oxydes est remplacée au moins partiellement par le quartz, les feldspaths, le sable de zircon, le rutile, le sable de monazite, le basalte et/ou l'ilménite.

5. Article suivant au moins une des revendications 1 à 4, caractérisé en ce que la poudre d'aluminium ou d'alliage partiellement oxydée a une granulométrie maximale de 20 à 60 $\mu$m, la fraction de plus de 80 $\mu$m étant inférieure à 2%.

6. Procédé de fabrication d'articles métalliques enduits suivant une des revendications 1 à 5, caractérisé en ce que, à partir d'une fritte d'émail résistant aux acides, pouvant adhérer directement sur une tôle d'acier et ayant une température de ramollissement inférieure à 520° C, ainsi qu'à partir d'une matière inorganique à base d'oxydes, exempte de plomb et de bore et ayant une température de ramollissement supérieure à 600° C, tout en ajoutant de l'eau, de l'argile et des sels de fixation, par broyage, on prépare une suspension aqueuse, on stabilise cette dernière à un pH se situant entre 5,5 et 7,5 au moyen de substances tampons hydrosolubles et on la mélange avec de la poudre d'aluminium ou d'alliage d'aluminium/cuivre, on applique la barbotine obtenue, par immersion ou par pulvérisation, sur des matières premières métalliques soumises à un traitement préalable de la manière habituelle par dégraissage et décapage, puis on sèche cette barbotine et on la soumet à une cuisson à des températures de 760 à 900° C.

9

100µ

FIG. 1